# EUROPEAN PATENT SPECIFICATION

(11) **EP 4 123 101 B1**
(45) Date of publication and mention of the grant of the patent: **09.07.2025**
(21) Application number: 22020349.1
(22) Date of filing: 20.07.2022
(51) Int. Cl.: E04D 3/36, E04D 5/14, E04B 1/76, F16B 13/12, F16B 43/00

(54) **A UNIT FIXING INSULATION TO THE FLAT ROOFS**
EINHEIT ZUR ISOLIERUNGSBEFESTIGUNG AUF FLACHDÄCHERN
UNITÉ DE FIXATION D'ISOLATION AUX TOITS PLATS

(30) Priority: 21.07.2021 PL 43854021
(43) Date of publication of application: 25.01.2023
(73) Proprietor: Koelner Rawlplug IP Spólka z ograniczona odpowiedzialnoscia, 51-416 Wroclaw (PL)
(72) Inventor: SZYMCZYSZYN, Sebastian, 46-250 Wolczyn (PL)
(74) Representative: Sleczka, Joanna

(56) References cited:
- EP-A2- 1 172 498
- DE-A1- 102006 061 492
- DE-A1- 102007 026 731
- US-A1- 2012 017 529
- US-B1- 6 308 483

## Description

The object of the invention is an insulation fixing assembly for flat roofs, intended in particular for fixing a sealing membrane.

There is a known arrangement for mechanical fixing of attenuating materials and sealing strips, enabling safe walking on flat roofs outside the walkway area, presented in the description of the invention patented with the no. EP1723290. The arrangement according to the invention consists of a sealing strip and an element fixing the sealing strip on an attenuating material, the fixing element consisting of a sealing disc with a plastic handle, comprising a hollow stem as well as a moulded head plate and a screw seated in the hollow stem, with its head providing support inside the hollow stem, whose tip exits the end of the hollow stem distant from the head plate and, under the pressure of the attenuating material and the sealing material, it can enter the bottom layer of the roof, or into a pin seated in the bottom layer of the roof, the sealing disc being placed on a plastic handle, seated in the roof superstructure, spanning the entirety of the head plate of the handle and, at least by its rim, radially surrounding the head plate of the handle with the sealing material, in a watertight manner binding and/or gluing the sealing strip, and the sealing disc comprising on its bottom side a central shaft, introduced coaxially into the hollow stem of the plastic handle. The sealing disc is made of a pliable flexible material, and/or it contains pliable flexible segments, and the sealing disc can be freely rotated around a longitudinal axis shared with the plastic handle. It is slipped directly onto the plastic handle with no need to move the screw, and the sealing disc has a composite design, in which the flexible material of the shield and/or its flexible segments are made of the same material as the sealing strip.

The documents US 6,308,483 B1 and US 2012/0017529 A1 show further insulation fixing assemblies.

The insulation fixing assembly for flat roofs according to the invention is comprised of a bushing with a dish, a fixing element, preferably in the form of a bolt, being placed inside the bushing, wherein a washer, provided from the bottom with spikes and with a ring ended with teeth around the opening of the washer, is seated on the bushing near the dish, while from the top side the washer has an upwardly protruding rim, forming a recess for the dish. The fixing assembly is characterised in that said ring and said teet extend from the bottom of the washer downward, closely along and parallel to the outer surface of the bushing, so that said ring and said teeth form the opening, which closely receives said bushing, wherein the spikes are arranged at a distance of 75% to 85% of the outer radius R of the washer and said spikes are arranged on the washer at an equal distance from the centre of the washer. From the side of the washer, the base of the spike has a cross-sectional shape resembling an oval. The end of the spike has a cross-sectional shape resembling an oval. The side walls of the spike are bent arcuately from 3/4 of its height from the base. The washer is made of a material different from that of the bushing with the dish. The washer is made of highly resilient plastic. The number of spikes ranges from 3 to 6. The teeth are bent around the bushing. The washer along with the dish placed thereon has a lenticular shape.

A variant of the insulation fixing assembly for flat roofs according to the invention is comprised of a bushing with a dish, a fixing element, preferably in the form of a bolt, being placed inside the bushing, wherein a washer provided from the bottom with spikes, and with a ring ended with teeth around the opening of the washer, is seated on the bushing near the dish, while from the top side the washer has a recess for the dish, with a diameter corresponding to the diameter of the dish characterised in that said ring and said teet extend from the bottom of the washer downward, closely along and parallel to the outer surface of the bushing, so that said ring and said teeth form the opening, which closely receives said bushing, and said spikes are arranged at a distance of 75% to 85% of the outer radius R of the washer (3') and said spikes (4') are arranged on the washer (3') at an equal distance from the centre of the washer (3'). From the side of the washer, the base of the spike has a cross-sectional shape resembling an isosceles triangle. The end of the spike has a cross-sectional shape resembling an oval. The side walls of the spike are bent arcuately from 3/4 of its height from the base. From the bottom, the washer is provided with protrusions, and it is made of a material different from that of the bushing with the dish. The washer is made of highly resilient plastic, and along with the dish placed thereon it has a lenticular shape. The number of spikes ranges from 3 to 6. The teeth are bent around the bushing. The washer along with the dish placed thereon has a lenticular shape.

The insulation fixing assembly for flat roofs according to the invention is characterised by a very simple construction, due to which it is easy to assemble and disassemble, as well as by durability and cheap manufacturing. This has been achieved due to the combination of the washer with the bushing by seating it from the bottom of the bushing and connecting it by means of the ring ended with teeth, which allows the washer to slide along its axis, as well as for its rotation. This enables the spikes to become properly positioned relative to the membrane during the occurrence of greater wind forces, as well as tensioning of the membrane, which makes the fixing permanent and reliable. On the other hand, sliding along the axis of the bushing allows for taking over some of the forces acting on the dish when struck, or when walking on the assembly, which also prevents destruction and dragging over the fixing element, e.g. a screw. Not only does the use of a connection of the bushing to the washer by a ring ended with teeth around the opening of the washer allow for sliding the washer along the axis of the bushing and its rotation, but also for efficient tight fitting, which prevents the sliding of the washer during the occurrence of lower forces, e.g. when transporting or mounting the assembly, with no need to use a mechanical lock. Such a connection does not increase the force needed to correctly and permanently mount the fixing assembly. Due to the washer being seated on the bushing with the dish as a separate element, it is possible to manufacture these elements from various kinds of plastics, i.e. with the washer from a highly resilient material, which allows for increasing the resistance to fracturing of the fixing assembly during a dynamic load, and the bushing with the dish from a rigid plastic, making it possible to maintain high bearing capacity of the product by increasing the resistance to the dragging of the head of the fixing element through the connector, and for increasing the resistance to static loads. The use of a proper shape of the spikes and the place where they are seated causes an increase in their resistance to rupture or warpage when mounting, it reduces the probability of breaking the sealing membrane in an uncontrolled manner, it prevents the generation of folds on the sealing membrane when mounting the assembly and it reduces the force needed to mount it. Moreover, this results in increasing the durability of the connection of the membrane to the fixing assembly, and at the same time it is possible to properly install the fixing assembly. The lenticular shape of the washer, which is adjusted to the size of the dish seated on the bushing, increases the durability and stiffness of the assembly, also hindering erroneous mounting of the elements due to excessively deep installation, at the same time considerably reducing the results of such installation involving reduced resistance of the dish of the assembly. The use of protrusions on the washer increases the force holding the membrane.

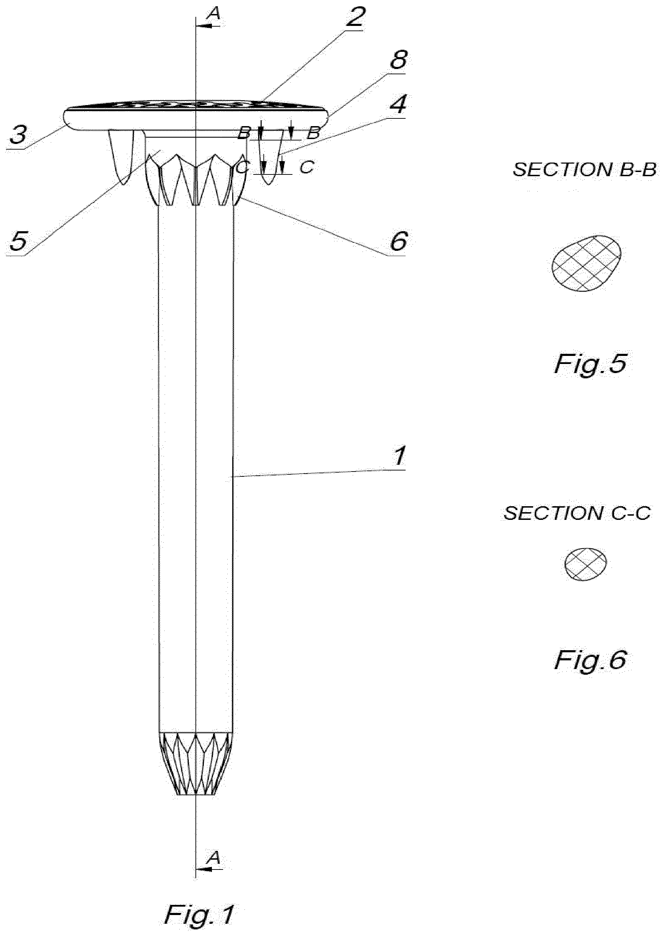

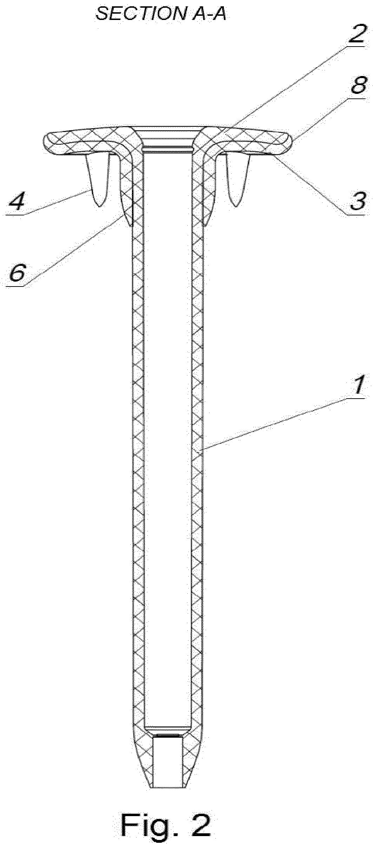

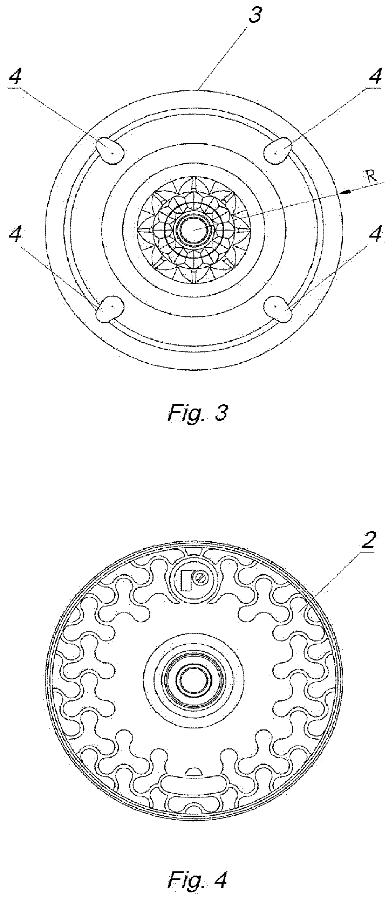

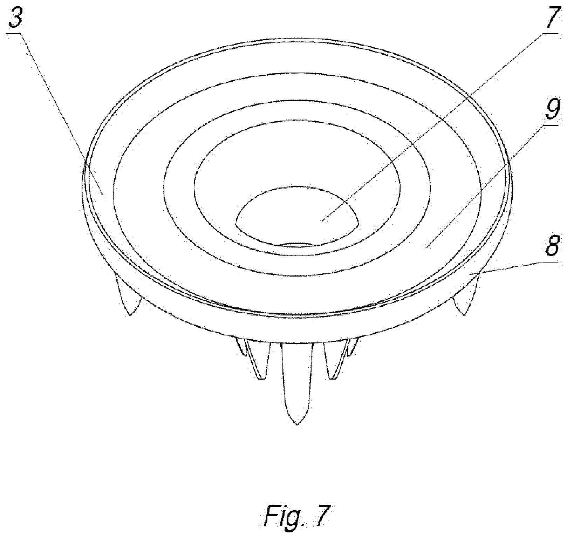

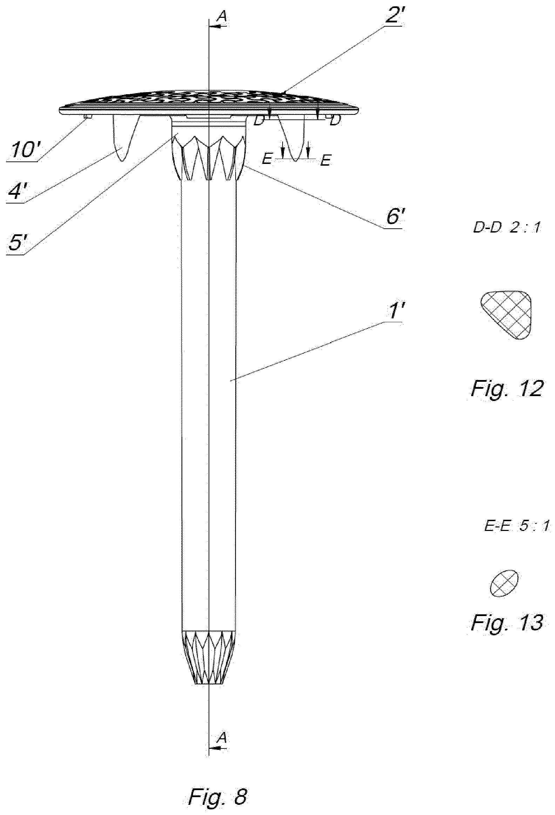

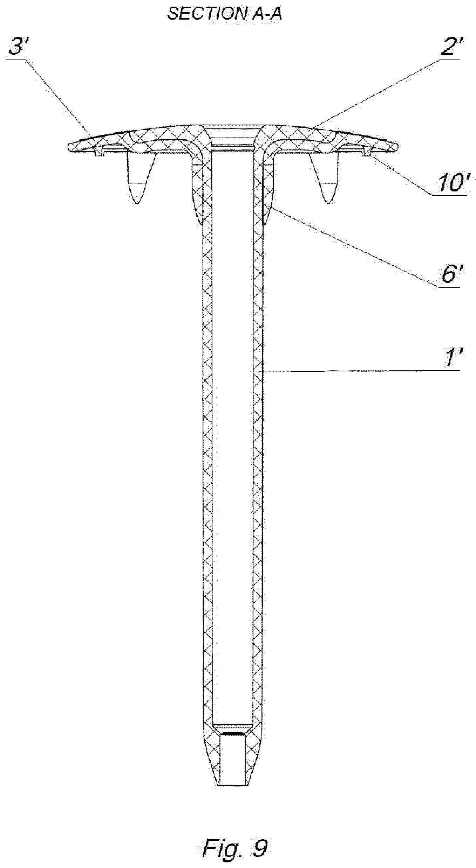

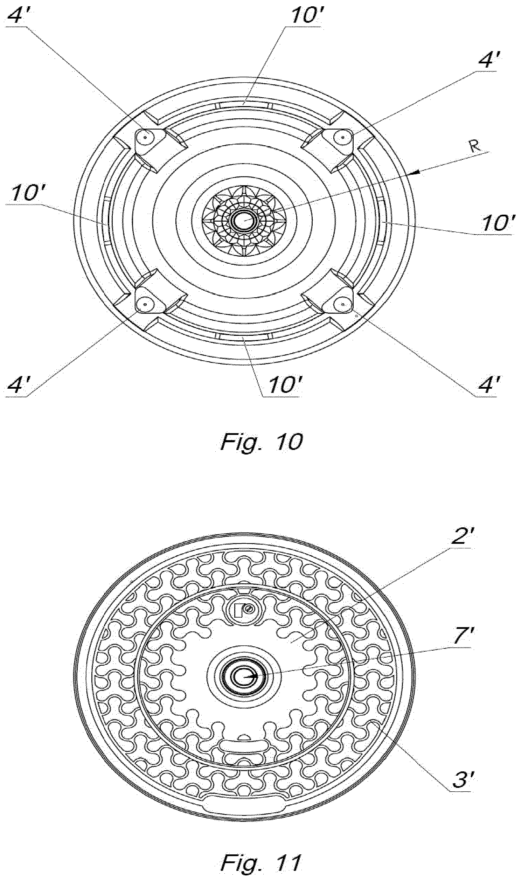

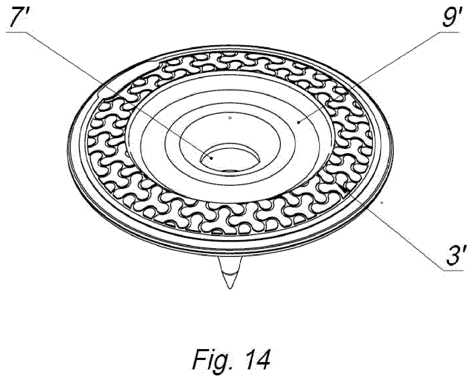

The insulation fixing assembly for flat roofs according to the invention is described more closely in an embodiment and in the drawing, where fig. 1 presents in a side view the first variant of the assembly, fig. 2 constitutes a cross-section along the line A-A across the first variant of the assembly of fig. 1, and fig. 3 presents the first variant of the assembly in a bottom view, while fig. 4 presents the first variant of the assembly in a top view, fig. 5 constitutes a cross-section along the line B-B across the spike of fig. 1, while fig. 6 constitutes a cross-section along the line C-C across the spike of fig. 1, while fig. 7 presents the washer of fig. 1 in an axonometric view, while fig. 8 presents in a side view the second variant of the assembly, fig. 9 constitutes a cross-section along the line A-A across the second variant of the assembly of fig. 8, and fig. 10 presents the second variant of the assembly in a bottom view, while fig. 11 presents the second variant of the assembly in a top view, while fig. 12 constitutes a cross-section along the line D-D across the spike of fig. 8, fig. 13 constitutes a cross-section along the line E-E across the spike of fig. 7, while fig. 14 presents the washer of fig. 8 in an axonometric view.

As presented in figs. 1 - 7, the first variant of the insulation fixing assembly for flat roofs according to the invention is comprised of a bushing 1 with a dish 2. A fixing element (not shown), preferably in the form of a screw, is placed inside the bushing 1. A washer 3, provided from the bottom with spikes 4 and with a ring 5 ended with teeth 6 around the opening 7 of the washer 3, is seated on the bushing 1 near the dish 2. The teeth 6 are bent around the bushing 1. The spikes 4 are arranged at a distance of 75% to 85% of the outer radius R of the washer 3, at an equal distance from its centre. The number of spikes 4 ranges from 3 to 6. From its top side, the washer 3 has a rim 8, protruding upwards and forming a recess 9 for the dish 2. The washer 3 is made of highly resilient plastic, meaning of a material with high resistance to fracturing during a dynamic load, and it has a lenticular shape. On the other hand, the bushing 1 along with the dish 2 is made of plastic which exhibits high resistance to static loads and to dragging the head of the fixing element through the bushing during load. From the side of the washer, the base of the spike 4 has a cross-sectional shape resembling an oval. On the other hand, the side walls of the spike 4 are bent arcuately from 3/4 of its height from the base, while the end of the spike 4 also has a cross-sectional shape resembling an oval.

Figs. 8 - 14 present a variant of the insulation fixing assembly for flat roofs according to the invention, comprised of a bushing 1' with a dish 2'. A fixing element (not shown), preferably in the form of a screw, is placed inside the bushing 1'. A washer 3', provided from the bottom with spikes 4' and with a ring 5' ended with teeth 6' around the opening 7' of the washer 3', is seated on the bushing 1' near the dish 2'. The teeth 6' are bent around the bushing 1'. The spikes 4' are arranged at a distance of 75% to 85% of the outer radius R' of the washer 3', at an equal distance from its centre. The number of spikes ranges from 3 to 6. From the top side, the washer 3' has a recess 9' for the dish 2', with a diameter corresponding to the diameter of the dish 2', while from the bottom it is provided with protrusions 10'. The washer 3' is made of highly resilient plastic, meaning a material with high resistance to fracturing during a dynamic load, and it has a lenticular shape. On the other hand, the bushing 1' along with the dish 2' is made of plastic which exhibits high resistance to static loads and to dragging the head of the fixing element through the bushing during load. From the side of the washer 3', the base of the spike 4' has a cross-sectional shape resembling an isosceles triangle. The side walls of the spike 4' are bent arcuately from 3/4 of its height from the base, while the end of the spike 4' has a cross-sectional shape resembling an oval.

## Claims

1. An insulation fixing assembly for flat roofs comprised of a bushing with a dish, a fixing element, preferably in the form of a bolt, being placed inside the bushing, wherein a washer (3), provided from the bottom with spikes (4) and with a ring (5) ended with teeth (6) around the opening (7) of the washer (3), is seated on the bushing (1) near the dish (2), while from the top side the washer (3) has an upwardly protruding rim (8) forming a recess (9) for the dish (2) **characterised in that** said ring (5) and said teet (6) extend from the bottom of the washer (3) downward, closely along and parallel to the outer surface of the bushing (1), so that said ring (5) and said teeth (6) form the opening (7), which closely receives said bushing (1), wherein the spikes (4) being arranged at a distance of 75% to 85% of the outer radius R of the washer (3) and said spikes (4) are arranged on the washer (3) at an equal distance from the centre of the washer (3).

2. The fixing assembly according to claim 1, **characterised in that**, from the side of the washer (3), the base of the spike (4) has a cross-sectional shape resembling an oval.

3. The fixing assembly according to claim 1, **characterised in that** the end of the spike (4) has a cross-sectional shape resembling an oval.

4. The fixing assembly according to claim 1, **characterised in that** the side walls of the spike (4) are bent arcuately from 3/4 of its height from the base.

5. The fixing assembly according to claim 1, **characterised in that** the washer (3) is made of a material different from that of the bushing (1) with the dish (2).

6. The fixing assembly according to claim 1, **characterised in that** the washer (3) is made of highly resilient plastic.

7. The fixing assembly according to claim 1, **characterised in that** the number of spikes (4) ranges from 3 to 6.

8. The fixing assembly according to claim 1, **characterised in that** the teeth (6) are bent around the bushing (1).

9. The fixing assembly according to claim 1, **characterised in that** the washer (3) along with the dish (2) placed thereon has a lenticular shape.

10. An insulation fixing assembly for flat roofs comprised of a bushing with a dish, a fixing element, preferably in the form of a bolt, being placed inside the bushing, wherein a washer (3'), provided from the bottom with spikes (4') and with a ring (5') ended with teeth (6') around the opening (7') of the washer (3'), is seated on the bushing (1') near the dish (2'), while from the top side the washer (3') has a recess (9') for the dish (2'), with a diameter corresponding to the diameter of the dish (2') **characterised in that** said ring (5') and said teet (6') extend from the bottom of the washer (3) downward, closely along and parallel to the outer surface of the bushing (1'), so that said ring (5') and said teeth (6') form the opening (7), which closely receives said bushing (1'), and said spikes (4') being arranged at a distance of 75% to 85% of the outer radius R of the washer (3') and said spikes (4') are arranged on the washer (3') at an equal distance from the centre of the washer (3').

11. The fixing assembly according to claim 10, **characterised in that**, from the side of the washer (3'), the base of the spike (4') has a cross-sectional shape resembling an isosceles triangle.

12. The fixing assembly according to claim 10, **characterised in that** the end of the spike (4') has a cross-sectional shape resembling an oval.

13. The fixing assembly according to claim 10, **characterised in that** the side walls of the spike (4') are bent arcuately from 3/4 of its height from the base.

14. The fixing assembly according to claim 10, **characterised in that**, from the bottom, the washer (3') is provided with protrusions (10').

15. The fixing assembly according to claim 10, **characterised in that** the washer (3') is made of a material different from that of the bushing (1') with the dish (2').

16. The fixing assembly according to claim 10, **characterised in that** the washer (3') is made of highly resilient plastic.

17. The fixing assembly according to claim 10, **characterised in that** the washer (3') along with the dish (2') placed thereon has a lenticular shape.

18. The fixing assembly according to claim 10, **characterised in that** the number of spikes (4') ranges from 3 to 6.

19. The fixing assembly according to claim 10, **characterised in that** the teeth (6') are bent around the bushing (1').

## Patentansprüche

1. Eine Isolierbefestigungsvorrichtung für Flachdächer, bestehend aus einer Buchse mit einer Schale, einem Befestigungselement, vorzugsweise in Form einer Schraube, das innerhalb der Buchse angeordnet ist, wobei eine Unterlegscheibe (3), die von der Unterseite her mit Stiften (4) und mit einem mit Zähnen (6) beendeten Ring (5) um die Öffnung (7) der Unterlegscheibe (3) herum versehen ist, auf der Buchse (1) in der Nähe der Schale (2) sitzt, während die Unterlegscheibe (3) von der Oberseite her einen nach oben vorstehenden Rand (8) aufweist, der eine Aussparung (9) für die Schale (2) bildet, **dadurch gekennzeichnet, dass** sich der Ring (5) und die Zähne (6) von der Unterseite der Unterlegscheibe (3) her nach unten erstrecken, dicht entlang und parallel zur Außenfläche der Buchse (1), so dass der Ring (5) und die Zähne (6) die Öffnung (7) bilden, die die Buchse (1) eng aufnimmt, wobei die Stifte (4) in einem Abstand von 75 % bis 85 % des Außenradius R der Unterlegscheibe (3) angeordnet sind und die Stifte (4) auf der Unterlegscheibe (3) in gleichem Abstand vom Mittelpunkt der Unterlegscheibe (3) angeordnet sind.

2. Befestigungsvorrichtung nach Anspruch 1, **dadurch gekennzeichnet, dass**, von der Seite der Unterlegscheibe (3) aus gesehen, die Basis des Stifts (4) eine Querschnittsform aufweist, die einem Oval ähnelt.

3. Befestigungsvorrichtung nach Anspruch 1, **dadurch gekennzeichnet, dass** das Ende des Stifts (4) eine Querschnittsform aufweist, die einem Oval ähnelt.

4. Befestigungsvorrichtung nach Anspruch 1, **dadurch gekennzeichnet, dass** die Seitenwände des Stifts (4) ab 3/4 seiner Höhe von der Basis bogenförmig gebogen sind.

5. Befestigungsvorrichtung nach Anspruch 1, **dadurch gekennzeichnet, dass** die Unterlegscheibe (3) aus einem anderen Material als die Buchse (1) mit der Schale (2) besteht.

6. Befestigungsvorrichtung nach Anspruch 1, **dadurch gekennzeichnet, dass** die Unterlegscheibe (3) aus hoch elastischem Kunststoff besteht.

7. Befestigungsvorrichtung nach Anspruch 1, **dadurch gekennzeichnet, dass** die Anzahl der Stifte (4) zwischen 3 und 6 liegt.

8. Befestigungsvorrichtung nach Anspruch 1, **dadurch gekennzeichnet, dass** die Zähne (6) um die Buchse (1) herum gebogen sind.

9. Befestigungsvorrichtung nach Anspruch 1, **dadurch gekennzeichnet, dass** die Unterlegscheibe (3) zusammen mit der darauf angeordneten Schale (2) eine linsenförmige Gestalt aufweist.

10. Isolierbefestigungsvorrichtung für Flachdächer, bestehend aus einer Buchse mit einer Schale, einem Befestigungselement, vorzugsweise in Form einer Schraube, das innerhalb der Buchse angeordnet ist, wobei eine Unterlegscheibe (3'), die von der Unterseite her mit Stiften (4') und mit einem mit Zähnen (6') beendeten Ring (5')um die Öffnung (7') der Unterlegscheibe (3') herum versehen ist, auf der Buchse (1') in der Nähe der Schale (2') sitzt, während die Unterlegscheibe (3') von der Oberseite her eine Aussparung (9') für die Schale (2') aufweist, mit einem dem Durchmesser der Schale (2') entsprechenden Durchmesser , **dadurch gekennzeichnet, dass** sich der Ring (5') und die Zähne (6') von der Unterseite der Unterlegscheibe (3) nach unten erstrecken, dicht entlang und parallel zur Außenfläche der Buchse (1'), sodass der Ring (5') und die Zähne (6') die Öffnung (7) bilden, die die Buchse (1') eng aufnimmt, und die Stifte (4') in einem Abstand von 75 % bis 85 % des Außenradius R der Unterlegscheibe (3') angeordnet sind und die Stifte (4') auf der Unterlegscheibe (3') in gleichem Abstand vom Mittelpunkt der Unterlegscheibe (3') angeordnet sind.

11. Befestigungsvorrichtung nach Anspruch 10, **dadurch gekennzeichnet, dass**, von der Seite der Unterlegscheibe (3') aus gesehen, die Basis des Stifts (4') eine Querschnittsform aufweist, die einem gleichschenkligen Dreieck ähnelt.

12. Befestigungsvorrichtung nach Anspruch 10, **dadurch gekennzeichnet, dass** das Ende des Stifts (4') eine Querschnittsform aufweist, die einem Oval ähnelt.

13. Befestigungsvorrichtung nach Anspruch 10, **dadurch gekennzeichnet, dass** die Seitenwände des Stifts (4') ab 3/4 seiner Höhe von der Basis bogenförmig gebogen sind.

14. Befestigungsvorrichtung nach Anspruch 10, **dadurch gekennzeichnet, dass** die Unterlegscheibe (3') unten mit Vorsprüngen (10') versehen ist.

15. Befestigungsvorrichtung nach Anspruch 10, **dadurch gekennzeichnet, dass** die Unterlegscheibe (3') aus einem anderen Material als die Buchse (1') mit der Schale (2') besteht.

16. Befestigungsvorrichtung nach Anspruch 10, **dadurch gekennzeichnet, dass** die Unterlegscheibe (3') aus hoch elastischem Kunststoff besteht.

17. Befestigungsvorrichtung nach Anspruch 10, **dadurch gekennzeichnet, dass** die Unterlegscheibe (3') zusammen mit der darauf angeordneten Schale (2') eine linsenförmige Gestalt aufweist.

18. Befestigungsvorrichtung nach Anspruch 10, **dadurch gekennzeichnet, dass** die Anzahl der Stifte (4') zwischen 3 und 6 liegt.

19. Befestigungsvorrichtung nach Anspruch 10, **dadurch gekennzeichnet, dass** die Zähne (6') um die Buchse (1') herum gebogen sind.

## Revendications

1. Ensemble de fixation d'isolation pour toits plats comprenant une douille avec une plateau, un élément de fixation, de préférence sous la forme d'un boulon, placé à l'intérieur de la douille, où une rondelle (3), pourvue à partir de sa partie inférieure de pointes (4) et d'une bague (5) terminé par des dents (6) autour de l'ouverture (7) de la rondelle (3), est placée sur la douille (1) près du plateau (2), tandis qu'à partir du côté supérieur la rondelle (3) présente un rebord (8) saillant vers le haut formant un évidement (9) pour le plateau (2) **caractérisé en ce que** ladite bague (5) et lesdites dents (6) s'étendent depuis le bas de la rondelle (3) vers le bas, étroitement le long de et parallèlement à la surface extérieure de la douille (1), de sorte que ladite bague (5) et lesdites dents (6) forment l'ouverture (7), qui reçoit étroitement ladite douille (1), où les pointes (4) sont disposées à une distance de 75 % à 85 % du rayon extérieur R de la rondelle (3) et lesdites pointes (4) sont disposées sur la rondelle (3) à une distance égale du centre de la rondelle (3).

2. Ensemble de fixation selon la revendication 1, **caractérisé en ce que**, du côté de la rondelle (3), la base de la pointe (4) a une forme en coupe transversale ressemblant à un ovale.

3. Ensemble de fixation selon la revendication 1, **caractérisé en ce que** l'extrémité de la pointe (4) a une forme en coupe transversale ressemblant à un ovale.

4. Ensemble de fixation selon la revendication 1, **caractérisé en ce que** les parois latérales de la pointe (4) sont courbées de manière arquée à partir des 3/4 de sa hauteur à partir de la base.

5. Ensemble de fixation selon la revendication 1, **caractérisé en ce que** la rondelle (3) est réalisée dans un matériau différent de celui de la douille (1) avec le plateau (2).

6. Ensemble de fixation selon la revendication 1, **caractérisé en ce que** la rondelle (3) est réalisée en plastique hautement résilient.

7. Ensemble de fixation selon la revendication 1, **caractérisé en ce que** le nombre de pointes (4) est compris entre 3 et 6.

8. Ensemble de fixation selon la revendication 1, **caractérisé en ce que** les dents (6) sont courbées autour de la douille (1).

9. Ensemble de fixation selon la revendication 1, **caractérisé en ce que** la rondelle (3) ainsi que le plateau(2) placé dessus ont une forme lenticulaire.

10. Ensemble de fixation d'isolation pour toits plats composé d'une douille avec un plateau, un élément de fixation, de préférence sous la forme d'un boulon, placé à l'intérieur de la douille, où une rondelle (3'), pourvue à partir de sa partie inférieure de pointes (4') et d'une bague (5') terminé par des dents (6') autour de l'ouverture (7') de la rondelle (3'), est placée sur la douille (1') près du plateau (2'), tandis que du côté supérieur la rondelle (3') comporte un évidement (9') pour le plateau(2'), dont le diamètre correspond au diamètre du plateau(2'), **caractérisé en ce que** ladite bague (5') et lesdites dents (6') s'étendent depuis le bas de la rondelle (3) vers le bas, étroitement le long de et parallèlement à la surface extérieure de la douille (1'), de sorte que ladite bague (5') et lesdites dents (6') forment l'ouverture (7), qui reçoit étroitement ladite douille (1'), et lesdites pointes (4') étant disposées à une distance comprise entre 75 % et 85 % du rayon extérieur R de la rondelle (3') et lesdites pointes (4') sont disposées sur la rondelle (3') à une distance égale du centre de la rondelle (3').

11. Ensemble de fixation selon la revendication 10, **caractérisé en ce que**, du côté de la rondelle (3'), la base de la pointe (4') a une forme en coupe transversale ressemblant à un triangle isocèle.

12. Ensemble de fixation selon la revendication 10, **caractérisé en ce que** l'extrémité de la pointe (4') a une forme en coupe transversale ressemblant à un ovale.

13. Ensemble de fixation selon la revendication 10, **caractérisé en ce que** les parois latérales de la pointe (4') sont courbées de manière arquée à partir des 3/4 de sa hauteur à partir de la base.

14. Ensemble de fixation selon la revendication 10, **caractérisé en ce que**, à partir du bas, la rondelle (3') est pourvue de saillies (10').

15. Ensemble de fixation selon la revendication 10, **caractérisé en ce que** la rondelle (3') est réalisée dans un matériau différent de celui de la douille (1') avec le plateau (2').

16. Ensemble de fixation selon la revendication 10, **caractérisé en ce que** la rondelle (3') est réalisée en plastique hautement résilient.

17. Ensemble de fixation selon la revendication 10, **caractérisé en ce que** la rondelle (3') ainsi que le plateau(2') placé dessus ont une forme lenticulaire.

18. Ensemble de fixation selon la revendication 10, **caractérisé en ce que** le nombre de pointes (4') est compris entre 3 et 6.

19. Ensemble de fixation selon la revendication 10, **caractérisé en ce que** les dents (6') sont courbées autour de la douille (1').
